(19) Europäisches Patentamt

European Patent Office

Office européen des brevets

(11) **EP 2 704 480 B1**

(12) **EUROPEAN PATENT SPECIFICATION**

(45) Date of publication and mention
of the grant of the patent:
**22.02.2017 Bulletin 2017/08**

(51) Int Cl.:
***H04W 24/10*** *(2009.01)*        *H04W 36/00* *(2009.01)*

(21) Application number: **12869130.0**

(22) Date of filing: **31.12.2012**

(86) International application number:
**PCT/CN2012/088029**

(87) International publication number:
**WO 2013/123821 (29.08.2013 Gazette 2013/35)**

(54) **METHOD AND DEVICE FOR CONTROLLING CELL RESELECTION**

VERFAHREN UND VORRICHTUNG ZUR STEUERUNG EINER ZELLENNEUAUSWAHL

PROCÉDÉ ET DISPOSITIF PERMETTANT DE COMMANDER UNE RESÉLECTION DE CELLULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.02.2012 CN 201210045588**

(43) Date of publication of application:
**05.03.2014 Bulletin 2014/10**

(73) Proprietor: **Huawei Device Co., Ltd.
Shenzhen, Guangdong 518129 (CN)**

(72) Inventors:
• **WAN, Jiang
Shenzhen
Guangdong 518129 (CN)**

• **WEI, Konggang
Shenzhen
Guangdong 518129 (CN)**

(74) Representative: **Kreuz, Georg Maria et al
Huawei Technologies Duesseldorf GmbH
Riesstrasse 8
80992 München (DE)**

(56) References cited:
**EP-A2- 1 492 372        CN-A- 1 725 901
CN-A- 1 964 551        CN-A- 102 111 804
US-A1- 2007 123 258        US-A1- 2009 135 759
US-A1- 2009 310 562        US-A1- 2010 309 887**

## Description

## TECHNICAL FIELD

The present invention relates to the field of terminal technologies, and in particular, to a method and an apparatus for controlling cell reselection.

## BACKGROUND

A Modem (Modem) or a Modem device is a part of a mobile communication device such as a mobile phone, a data card, or a tablet.

In a weak field, a signal strength of a single cell is weak, and signal quality is poor and unstable. Parameters such as a signal strength and signal quality in a current cell have little difference from those in a neighboring cell. When the Modem or the Modem device is standby in the weak field, a signal quality factor is usually affected because that a signal is transitorily unstable. When a signal quality factor of the neighboring cell that is obtained through an R algorithm is better than the signal quality factor of the current cell, reselection of a serving cell is performed from the current cell to the neighboring cell. Due to the instability of a signal in the weak field, the Modem or the Modem device is required to perform cell reselection repeatedly, so as to ensure that the serving cell is a cell with an optimal signal quality factor. However, such repeated cell reselection increases standby power consumption, and reduces a standby time of the Modem or the Modem device.

US2009/135759 discloses the mobile node is roaming, it first starts off connected via the Base Station. The interface detects the presence of WLAN APs and near the position A. However, as the signal strength of both these WLAN APs and is low due to the mobile node being at the edge of their coverage, the Stability Control Unit records their presence but does not present them to the mobile node as candidates for handover.

US2010/309887 discloses the home cell requests the RACH allocation for the handover to the public cell having the greatest and stable signal strength based on the information received from the UE. The public cell, receiving the request, allocates a dedicated RACH or a reserved RACH depending on a network operation status.

EP1492372 discloses a communication apparatus for communicating with a plurality of base stations in an area covered by a plurality of sectors corresponding to the base stations, comprises receiving means for receiving signals from the sectors and calculating means for calculating a plurality of kinds of variation patterns for each of the signals from the sectors. One of the sectors as a suitable sector for connection is selected depending upon a relationship among the sectors with respect to the variation patterns calculated by the calculating means. As the variation patterns of the signals, calculation is made of, for example, average values, variation amounts, and variation directions of the reception levels.

Based on the relationship among the variation patterns, the suitable sector is selected.

US2009/310562 discloses a method and apparatus of a wireless subscriber unit triggering an inter-technology handoff are disclosed. One method includes estimating a signal quality of first technology communication signals received from a serving base station. Information of neighboring base stations is received from the serving base station. Based on the information of the neighboring base stations, a signal quality of first technology communication signals received from each of the neighboring base stations is estimated. An inter-technology handoff is triggered based on a function of the signal quality of communication signals received from a serving base station and the signal quality of communication signals received from each of the neighboring base stations.

US2007/123258 discloses a method and a mobile receiver are provided for autonomous handoff at the mobile receiver in support for unidirectional transmission from fixed servers. The mobile receiver selects a broadcast server on which it then receives a designation for a downlink traffic channel which is not paired with an uplink traffic channel. Data and neighbor server information are received at the mobile receiver. The mobile receiver autonomously reselects a new server when it moves closer to the new server which now provides a better signal quality.

## SUMMARY

The present invention provide a method and an apparatus for controlling cell reselection, so as to avoid performing meaningless cell reselection in a weak field situation, reduce standby power consumption of a Modem or a Modem device, and prolong a standby time, as defined in independent claims 1 and 8, respectively.

In order to achieve the foregoing objectives, the present invention adopts the following technical solutions.

According to one aspect of the present invention a method for controlling cell

when duration starting from when a signal strength of a current cell is just lower than a set value exceeds a first set time, acquiring signal strengths of the current cell and a neighboring cell within a second set time;

determining signal stability of the current cell according to the signal strength of the current cell, and determining signal stability of the neighboring cell according to the signal strength of the neighboring cell; and

making a serving cell camp on the current cell when the signal stability of the neighboring cell is not less than the signal stability of the current cell.

The method for controlling cell reselection includes in another implementation form:

when duration during which a signal strength of a current cell is lower than a set value exceeds a third set time, successively acquiring signal strengths of a serving cell at time points of which the number is designated;

calculating signal stability of the serving cell according to the obtained signal strengths of which the number is designated;

when the signal stability is greater than a preset threshold, acquiring signal strengths of the serving cell and a neighboring cell within a fourth set time;

determining signal stability of the serving cell according to a signal strength of the serving cell, and determining signal stability of the neighboring cell according to a signal strength of the neighboring cell; and

camping on the serving cell when the signal stability of the neighboring cell is not less than the signal stability of the serving cell.

According to another aspect of the present invention an apparatus for controlling cell reselection includes in a preferred implementation form:

a signal strength acquisition unit, configured to, when duration starting from when a signal strength of a current cell is just lower than a set value exceeds a first set time, acquire signal strengths of the current cell and a neighboring cell within a second set time;

a signal stability determining unit, configured to determine signal stability of the current cell according to the signal strength of the current cell, and determine signal stability of the neighboring cell according to the signal strength of the neighboring cell; and

a reselection control unit, configured to make a serving cell camp on the current cell when the signal stability of the neighboring cell is not less than the signal stability of the current cell.

The apparatus for controlling cell reselection includes in another implementation form:

a first unit, configured to, when duration during which a signal strength of a current cell is lower than a set value exceeds a third set time, successively acquire signal strengths of a serving cell at time points of which the number is designated;

a second unit, configured to calculate signal stability of the serving cell according to the obtained signal strengths of which the number is designated;

a third unit, configured to acquire, when the signal stability is greater than a preset threshold, signal strengths of the serving cell and a neighboring cell within a fourth set time;

a fourth unit, configured to determine signal stability of the serving cell according to a signal strength of the serving cell, and determine signal stability of the neighboring cell according to a signal strength of the neighboring cell; and

a fifth unit, configured to camp on the serving cell when the signal stability of the neighboring cell is not less than the signal stability of the serving cell.

In the method and apparatus for controlling cell reselection provided by the present invention, when the duration during which the signal strength of the current cell is lower than the set value exceeds the set time, it indicates that the Modem or the Modem device enters a weak field. The signal strengths of the current cell and the neighboring cell within the second set time are acquired, the signal stability of the current cell and the neighboring cell are calculated, and the serving cell is made to camp on the current cell when the signal stability of the neighboring cell is not less than the signal stability of the current cell. Through the present invention, a problem in the prior art is solved that, in a weak field situation, due to the signal instability in the weak field, the Modem or the Modem device is required to continuously perform cell reselection, which increases the standby power consumption, and shortens the standby time of the Modem or the Modem device, thereby implementing that the Modem or the Modem device camps on a most stable serving cell in the weak field situation, avoiding performing meaningless cell reselection, reducing the standby power consumption of the Modem or the Modem device, and prolonging the standby time.

## BRIEF DESCRIPTION OF DRAWINGS

FIG. 1 is a flow chart of a method for controlling cell reselection according to Embodiment 1 of the present invention;

FIG. 2 is an overall flow chart of a method for controlling cell reselection according to Embodiment 1 of the present invention;

FIG. 3 is a flow chart of a method for controlling cell reselection according to Embodiment 1 of the present invention;

FIG. 4 is a structural diagram of an apparatus for controlling cell reselection according to Embodiment 2 of the present invention;

FIG. 5 is a structural diagram of an apparatus for controlling cell reselection according to Embodiment 2 of the present invention; and

FIG. 6 is a structural diagram of an apparatus for controlling cell reselection according to Embodiment 2 of the present invention.

## DESCRIPTION OF EMBODIMENTS

A method and an apparatus for controlling cell reselection in the embodiments of the present invention are described in detail below with reference to the accompanying drawings.

**Embodiment 1**

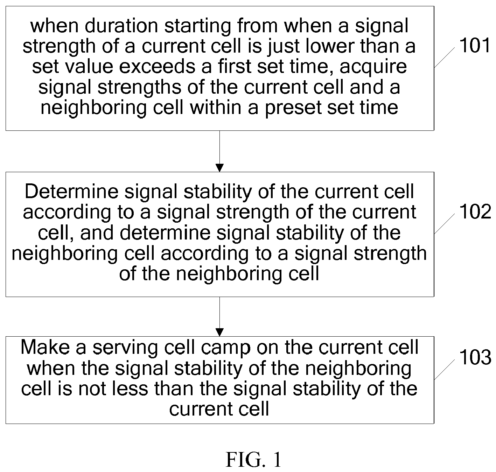

A method for controlling cell reselection provided in an embodiment of the present invention is shown in FIG. 1, and includes:

101: When duration starting from when a signal strength of a current cell is just lower than a set value exceeds a first set time, acquire a signal strength of the current cell within a second set time and a signal strength of a neighboring cell within the second set time, where the first set time refers to an extremely short time after the time of being lower than the set value, so that the embodiment corresponds to a scenario in which the current cell is just switched from a stronger signal strength to a weak signal strength lower than the set value.

102: Determine signal stability of the current cell according to the signal strength of the current cell within the second set time, and determine signal stability of the neighboring cell according to the signal strength of the neighboring cell within the second set time.

103: Make a serving cell camp on the current cell when the signal stability of the neighboring cell is not less than the signal stability of the current cell.

The second set time is a time after the duration ends and is independent of the duration.

In the method for controlling cell reselection provided in the embodiment of the present invention, when the signal strength of the current cell is lower than the set value and the duration exceeds the set time, it indicates that the Modem or the Modem device enters a weak field. The signal strength of the current cell and the signal strength of the neighboring cell within the second set time are acquired, the signal stability of the current cell and the signal stability of the neighboring cell are calculated, and the serving cell is made to camp on the current cell when the signal stability of the neighboring cell is not less than the signal stability of the current cell. Through the embodiment of the present invention, a problem in the prior art that, in a weak field situation, due to the signal instability in the weak field, the Modem or the Modem device is required to continuously perform cell reselection, which increases the standby power consumption, and shortens the standby time of the Modem or the Modem device is solved, thereby implementing that the Modem or the Modem device camps on a most stable serving cell in the weak field situation, avoiding performing meaningless cell reselection, reducing the standby power consumption of the Modem or the Modem device, and prolonging the standby time.

The signal strength refers to signal power.

In specific application, when the signal strength of the current cell is lower than the set value and the duration exceeds the set time, the set value may be set to -95dbm, and when the Modem or the Modem device detects that the signal strength of the current cell is lower than -95dbm, and the duration exceeds the set time, it indicates that a geographic area where the Modem or the Modem device is located is a weak field; then, network searching is started, so as to acquire the current cell and the signal strength of the neighboring cell that is obtained through network searching, the stability is calculated, and a most stable cell is selected for camping.

The signal stability of the current cell is determined according to $Q'_{var} = \dfrac{\sum\limits_{n=1}^{N} \left| q_n - Q_{avg} \right|}{N}$, where $Q'_{var}$ is the signal stability of the current cell, $q_n$ is a signal strength of the current cell that is acquired at the nth time point within the second set time, $Q_{avg}$ is an average of signal strengths of the current cell that are acquired at N time points within the second set time, N is the number of times when the signal strength of the current cell is acquired within the second set time, and N is greater than or equal to 2 (This requirement applies to the following embodiments).

The signal stability of the neighboring cell is determined according to $Q_r = \dfrac{\sum\limits_{n=1}^{N} \left| w_n - Q_a \right|}{N}$, where $Q_r$ is the signal stability of the neighboring cell, $w_n$ is a signal strength of the neighboring cell that is acquired at the nth time point within the second set time, $Q_a$ is an average of signal strengths of the neighboring cell that are acquired at N time points within the second set time, and N is the number of times when the signal strength of the neighboring cell is acquired within the second set time.

The signal stability of the current cell and the signal stability of the neighboring cell are obtained according to a variance formula, and the smaller a variance value is, the better the signal stability is. Therefore, when the signal stability of the neighboring cell is not less than the signal stability of the current cell, the serving cell is made to camp on the current cell, where

when the number of neighboring cells is one, and when the signal stability of the neighboring cell is not less than the signal stability of the current cell, the serving cell is made to camp on the current cell; and

when the number of neighboring cells is at least two, and when minimum stability among signal stability of the neighboring cells is not less than the signal stability of the current cell, the serving cell is made to camp on the current cell.

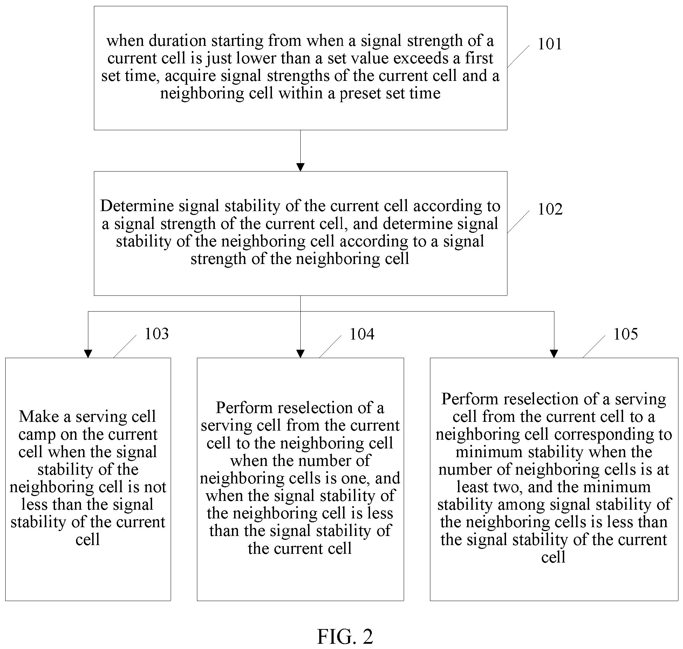

As shown in FIG. 2, another condition also exists.

When the signal stability of the neighboring cell is less than the signal stability of the current cell, the serving cell is reselected to be the neighboring cell. Specifically, the following two situations are included.

104: Perform reselection of the serving cell from the current cell to the neighboring cell when the number of neighboring cells is one, and when the signal stability of the neighboring cell is less than the signal stability of the current cell.

105: Perform reselection of the serving cell from the current cell to a neighboring cell corresponding to minimum stability when the number of neighboring cells is at least two, and when the minimum stability among signal stability of the neighboring cells is less than the signal stability of the current cell.

In the prior art, an R algorithm is adopted to sort neighboring cells in a network searching result, and a signal quality factor Rn of a neighboring cell ranking first and a signal quality factor Rs of the current cell are calculated. When Rs<Rn and the duration exceeds a preset value, cell reselection is started, and the Modem or the Modem device reselects the neighboring cell from the current cell, where, Rn = Qmeas (n) - qoffset(s, n), Qmeas (n) is a signal quality measured value of a nth neighboring cell, that is, a signal strength of the nth neighboring cell; qoffset(s, n) is a signal quality offset value of the nth neighboring cell, and this parameter is acquired from a base station. In a weak field, the signal strength is weak, and signal quality is poor and unstable; therefore, a signal quality factor may be affected because a signal is transitorily unstable, resulting in repeated cell reselection. In the present invention, cell reselection of the Modem or the Modem device is based on the signal stability of the current cell and the signal stability of the neighboring cell. A cell with an optimal signal stability is selected for camping; even if the signal strength and the signal quality of the current cell are not the best, but the signal stability of the current cell is the optimal, cell reselection is not performed, and the current cell is camped on, thereby avoiding performing meaningless cell reselection in the weak field situation, reducing the standby power consumption of the Modem or the Modem device, and prolonging the standby time.

Both in the case that the reselection of the serving cell is performed from the current cell to the neighboring cell, and in the case that the serving cell is made to camp on the current cell, the serving cell is required to be monitored in real time, so as to ensure that the stability of the serving cell where the Modem or the Modem device is located is the best, and even if the signal strength and the signal quality of the serving cell are not the best, cell reselection is still not performed, thereby reducing the standby power consumption of the Modem or the Modem device.

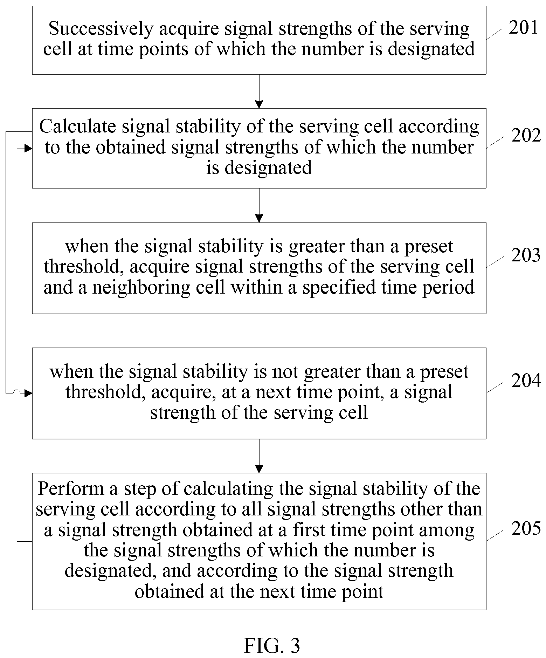

As shown in FIG. 3, steps of monitoring the serving cell in real time are described as follows. The following steps are performed in the following conditions, that is, after the serving cell is made to camp on the current cell, or the reselection of the serving cell is performed from the current cell to the neighboring cell, or the reselection of the serving cell is performed from the current cell to the neighboring cell corresponding to the minimum stability, and when the duration starting from when the signal strength of the current cell is lower than the set value exceeds a third set time, where the third set time refers to a time during which the signal strength of the current cell continuously keeps lower than the set value, and usually, the duration is relatively long and corresponds to a scenario in which the current cell is stably in a weak signal strength.

201: Successively acquire signal strengths of the serving cell at time points of which the number is designated.

Intervals between adjacent time points may be the same.

For example, a first signal strength of the serving cell at the first time point is acquired at 0 ms, and after an interval of 640 ms, a second signal strength of the serving cell at the second time point is acquired, and so on; altogether, 100 signal strengths of the serving cell at 100 time points are acquired.

202: Calculate signal stability of the serving cell according to the obtained signal strengths of which the number is designated.

For example, when the 100 signal strengths of the serving cell are acquired, the signal stability of the serving cell is calculated according to a formula

$$H_{var} = \frac{\sum_{k=1}^{100} \left| h_k - H_{avg} \right|}{100},$$ where $H_{var}$ is the signal stability of the serving cell, $h_k$ is a signal strength of the serving cell that is acquired at the kth time point, and $H_{avg}$ is an average of the signal strengths of the serving cell that are acquired at the 100 time points.

203: When the signal stability is greater than a preset threshold, acquire signal strengths of the serving cell and the neighboring cell within a fourth set time.

The fourth set time is a time after the time points of which the number is designated, and the fourth set time is independent of the time points of which the number is designated.

When the signal stability is greater than the preset threshold, it indicates that the serving cell is unstable; then, network searching is started, so as to acquire the signal strengths of the serving cell and the neighboring cell within the fourth set time.

The signal stability of the serving cell is determined according to the signal strength of the serving cell, and signal stability of the neighboring cell is determined according to the signal strength of the neighboring cell.

Specifically, the signal stability of the serving cell is calculated according to $$Y = \frac{\sum_{m=1}^{M} \left| y_m - Y_a \right|}{M},$$ where Y is the signal stability of the serving cell, $y_m$ is a signal strength of the serving cell that is acquired at the mth time point within the fourth set time, $Y_a$ is an average of signal strengths of the serving cell that are acquired at M time points within the fourth set time, and M is the number of times when the signal strength of the serving cell is acquired within the fourth set time.

The signal stability of the neighboring cell is calculated according to a formula $G = \dfrac{\sum\limits_{m=1}^{M} \left| g_m - G_a \right|}{M}$, where G is the signal stability of the neighboring cell, $g_m$ is a signal strength of the neighboring cell that is acquired at the mth time point within the fourth set time, $G_a$ is an average of signal strengths of the neighboring cell that are acquired at M time points within the fourth set time, and M is the number of times when the signal strength of the neighboring cell is acquired within the fourth set time.

The determined signal stability of the serving cell is compared with the determined signal stability of the neighboring cell.

When the number of neighboring cells is one, the serving cell is camped on when the signal stability of the neighboring cell is not less than the signal stability of the serving cell, or the serving cell is reselected to be the neighboring cell when the signal stability of the neighboring cell is less than the signal stability of the serving cell.

When the number of neighboring cells is at least two, the serving cell is camped on when minimum stability among signal stability of the neighboring cells is not less than the signal stability of the serving cell, or the serving cell is reselected to be a neighboring cell corresponding to minimum stability when the minimum stability among signal stability of the neighboring cells is less than the signal stability of the serving cell.

Both in the case of camping on the serving cell, and in the case of being reselected to be the neighboring cell, the current cell is required to be monitored in real time, so as to ensure that the stability of the serving cell where the Modem or the Modem device is located is the best, and perform step 201.

> 204: When the signal stability is not greater than the preset threshold, acquire, at a next time point, a signal strength of the serving cell.
>
> 205: Perform a step of calculating the signal stability of the serving cell according to all signal strengths other than the signal strength obtained at the first time point among the signal strengths of which the number is designated, and according to the signal strength obtained at the next time point.

When the signal stability is not greater than the preset threshold, it indicates that the serving cell is still in stability within the preset threshold, and the serving cell continues to be monitored. For example, a 101th signal strength of the serving cell at the 101th time point is acquired, and the signal stability of the serving cell is calculated according to a formula 101

$H'_{var} = \dfrac{\sum\limits_{k=2}^{101} \left| h_k - H'_{avg} \right|}{100}$, were He is the signal stability of the serving cell, $h_k$ is a signal strength of the serving cell acquired at the kth time point, the kth time point is any time point from the second time point to a 101th time point, and $H'_{avg}$ is an average of signal strengths of the serving cell that are acquired at 100 time points.

The signal stability of the serving cell that is obtained through recalculation is compared with the preset threshold, so as to determine whether to acquire the signal strengths of the serving cell and the neighboring cell, and perform step 203 or step 204.

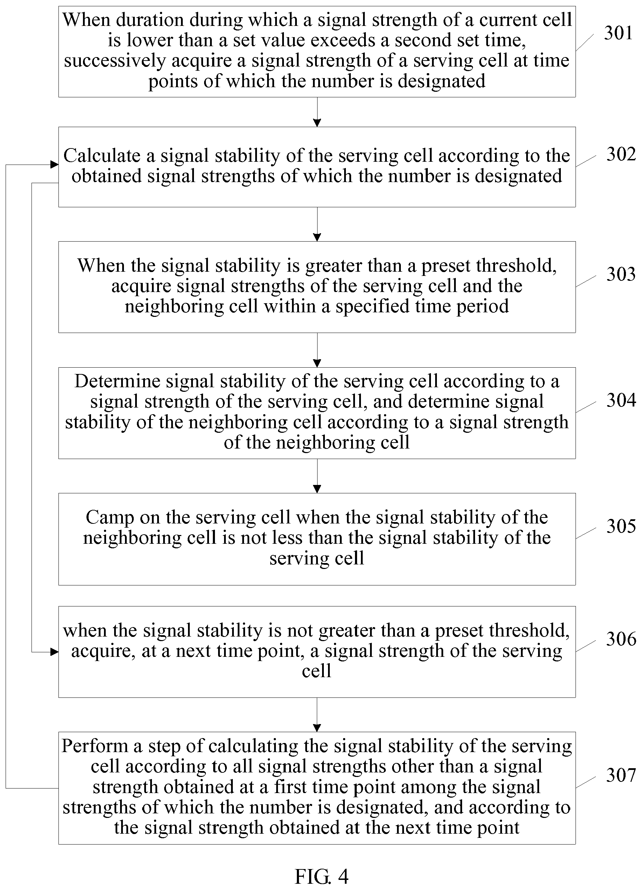

An embodiment of the present invention further provides a method for controlling cell reselection, which is shown in FIG. 4, and includes:

> Step 301: When duration during which a signal strength of a current cell is lower than a set value exceeds a third set time, successively acquire signal strengths of a serving cell at time points of which the number is designated, where the third set time refers to a time during which the signal strength of the current cell keeps lower than the set value, and usually, the duration is relatively long and corresponds to a scenario in which the current cell is stably in a weak signal strength.
>
> Step 302: Calculate signal stability of the serving cell according to the obtained signal strengths of which the number is designated.
>
> Step 303: When the signal stability is greater than a preset threshold, acquire signal strengths of the serving cell and the neighboring cell within a fourth set time.
>
> Step 304: Determine signal stability of the serving cell according to a signal strength of the serving cell, and determine signal stability of the neighboring cell according to a signal strength of the neighboring cell.
>
> Step 305: Camp on the serving cell when the signal stability of the neighboring cell is not less than the signal stability of the serving cell.

Further, the method also includes:

> Step 306: When the signal stability is not greater than the preset threshold, acquire, at a next time point, a signal strength of the serving cell.
>
> Step 307: Perform a step of calculating the signal stability of the serving cell according to all signal strengths other than a signal strength obtained at a first time point among the signal strengths of which the number is designated, and according to the signal strength obtained at the next time point.

Specifically, the camping on the serving cell when the signal stability of the neighboring cell is not less than the signal stability of the serving cell includes:

camping on the serving cell when the number of neighboring cells is one, and when the signal stability of the neighboring cell is not less than the signal stability of the serving cell; and
camping on the serving cell when the number of neighboring cells is at least two, and when minimum stability among signal stability of the neighboring cells is not less than the signal stability of the serving cell.

In addition, the method of the foregoing embodiment further includes:

reselecting the serving cell to be the neighboring cell when the number of neighboring cells is one, and when the signal stability of the neighboring cell is less than the signal stability of the serving cell; and
reselecting the serving cell to be a neighboring cell corresponding to minimum stability when the number of neighboring cells is at least two, and when the minimum stability among signal stability of the neighboring cells is less than the signal stability of the serving cell.

In the prior art, a Modem or a Modem device obtains, through calculation, a signal quality factor and a signal power factor of the serving cell by using an S algorithm. When a value of any one of the two factors reaches a co-frequency measurement threshold, an inter-frequency measurement threshold, or an inter-system measurement threshold, the Modem or the Modem device starts network searching measurement in a corresponding scope. In the weak field, the signal strength is weak, and the signal quality is poor and unstable, which affects the signal quality factor and the signal power factor of the serving cell, so that the Modem or the Modem device starts network searching. In the present invention, only the signal stability of the serving cell is monitored, and no matter whether the signal quality factor and the signal power factor of the serving cell reach the measurement threshold, as long as the signal stability of the serving cell is not greater than the preset threshold, the serving cell continues to be camped on, the serving cell continues to be monitored, and network searching is not started, thereby avoiding performing meaningless network searching in the weak field situation, reducing the standby power consumption of the Modem or the Modem device, and prolonging the standby time.

A stability state of the serving cell may be obtained in time through the foregoing method, so as to ensure that the stability of the serving cell where the Modem or the Modem device is located is the optimal in the weak field.

**Embodiment 2**

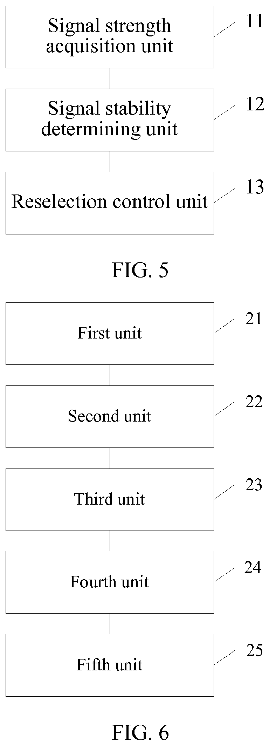

An apparatus for controlling cell reselection provided in an embodiment of the present invention is shown in FIG. 5, and includes a signal strength acquisition unit 11, a signal stability determining unit 12, and a reselection control unit 13.

The signal strength acquisition unit 11 is configured to, when duration starting from when a signal strength of a current cell is just lower than a set value exceeds a first set time, acquire signal strengths of the current cell and a neighboring cell within a second set time.

The signal stability determining unit 12 is configured to determine signal stability of the current cell according to the signal strength of the current cell, and determine signal stability of the neighboring cell according to a signal strength of the neighboring cell.

The reselection control unit 13 is configured to make a serving cell camp on the current cell when the signal stability of the neighboring cell is not less than the signal stability of the current cell.

The first set time refers to an extremely short time after the time of being lower than the set value, so that the embodiment corresponds to a scenario in which the current cell is just switched from a stronger signal strength to a weak signal strength lower than the set value.

In the apparatus for controlling cell reselection provided in the embodiment of the present invention, when the signal strength of the current cell is lower than the set value and the duration exceeds the set time, the signal strength acquisition unit acquires the signal strengths of the current cell and the neighboring cell within the second set time, the signal stability determining unit obtains the signal stability of the current cell and the signal stability of the neighboring cell, and the reselection control unit makes the serving cell camp on the current cell when the signal stability of the neighboring cell is not less than the signal stability of the current cell. In the embodiment of the present invention, a problem in the prior art that, in a weak field situation, due to the signal instability in the weak field, the Modem or the Modem device is required to continuously perform cell reselection, which increases the standby power consumption and shortens the standby time of the Modem or the Modem device is solved, thereby implementing that the Modem or the Modem device camps on a most stable serving cell in the weak field situation, avoiding performing meaningless cell reselection, reducing the standby power consumption of the Modem or the Modem device, and prolonging the standby time.

In the apparatus for controlling cell reselection provided in the embodiment of the present invention, the signal stability determining unit is specifically configured to:

determine the signal stability of the current cell according to $Q'_{var} = \dfrac{\sum\limits_{n=1}^{N} \left| q_n - Q_{avg} \right|}{N}$, where $Q'_{var}$ is the signal stability of the current cell, $q_n$ is a signal strength of the current cell that is acquired at the nth time point within the second set time, $Q_{avg}$ is an average of signal strengths of the current cell that are acquired at N time points within the second set time, and N is the number of times when the signal strength of the current cell is acquired within the second set time.

The signal stability determining unit is further configured to:

determine the signal stability of the neighboring cell according to $Q_r = \dfrac{\sum\limits_{n=1}^{N} \left| w_n - Q_a \right|}{N}$, where $Q_r$ is the signal stability of the neighboring cell, $w_n$ is a signal strength of the neighboring cell that is acquired at the nth time point within the second set time, $Q_a$ is an average of signal strengths of the neighboring cell that are acquired at N time points within the second set time, and N is the number of times when the signal strength of the neighboring cell is acquired within the second set time.

The reselection control unit is specifically configured to make the serving cell camp on the current cell when the number of neighboring cells is one, and when the signal stability of the neighboring cell is not less than the signal stability of the current cell; and make the serving cell camp on the current cell when the number of neighboring cells is at least two, and when minimum stability among signal stability of the neighboring cells is not less than the signal stability of the current cell.

The reselection control unit is further configured to perform reselection of the serving cell from the current cell to the neighboring cell when the number of neighboring cells is one, and when the signal stability of the neighboring cell is less than the signal stability of the current cell; and is further configured to perform reselection of the serving cell from the current cell to a neighboring cell corresponding to minimum stability when the number of the neighboring cells is at least two, and when the minimum stability among signal stability of the neighboring cells is less than the signal stability of the current cell.

The following units are applied in the following scenario, that is, after the serving cell is made to camp on the current cell, or reselection of the serving cell is performed from the current cell to the neighboring cell, or reselection of the serving cell is performed from the current cell to the neighboring cell corresponding to the minimum stability, and when the duration starting from when the signal strength of the current cell is lower than the set value exceeds a third set time. The third set time refers to duration during which the signal strength of the current cell continuously keeps lower than the set value, and the duration is usually relatively long and corresponds to a scenario in which the current cell is stably in a weak signal strength.

The signal strength acquisition unit is further configured to successively acquire signal strengths of the serving cell at time points of which the number is designated.

The signal stability determining unit is further configured to calculate signal stability of the serving cell according to the obtained signal strengths of which the number is designated.

The signal strength acquisition unit is further configured to, when the signal stability is greater than a preset threshold, acquire signal strengths of the serving cell and the neighboring cell within a fourth set time.

The signal strength acquisition unit is further configured to when the signal stability is not greater than the preset threshold, acquire, at a next time point, a signal strength of the serving cell.

The signal stability determining unit is further configured to recalculate the signal stability of the serving cell according to all signal strengths other than a signal strength obtained at a first time point among the signal strengths of which the number is designated, and according to the signal strength obtained at the next time point.

The signal stability determining unit is further configured to determine the signal stability of the serving cell according to the signal strength of the serving cell, and determine the signal stability of the neighboring cell according to the signal strength of the neighboring cell.

The reselection control unit is further configured to, when the number of neighboring cells is one, camp on the serving cell when the signal stability of the neighboring cell is not less than the signal stability of the serving cell, or reselect the serving cell to be the neighboring cell when the signal stability of the neighboring cell is less than the signal stability of the serving cell; or when the number of neighboring cells is at least two, camp on the serving cell when minimum stability among signal stability of the neighboring cells is not less than the signal stability of the serving cell, or reselect the serving cell to be a neighboring cell corresponding to minimum stability when the minimum stability among signal stability of the neighboring cells is less than the signal stability of the serving cell.

An apparatus for controlling cell reselection provided in an embodiment of the present invention is shown in FIG. 6, and includes a first unit 21, a second unit 22, a third unit 23, a fourth unit 24, and a fifth unit 25, where the first unit 21 is configured to, when duration during which a signal strength of a current cell is lower than a set value exceeds a third set time, successively acquire signal strengths of a serving cell at time points of which the number is designated;

the second unit 22 is configured to calculate signal stability of the serving cell according to the obtained signal strengths of which the number is designated;

the third unit 23 is configured to, when the signal stability is greater than a preset threshold, acquire signal strengths of the serving cell and the neighboring cell within a fourth set time;

the fourth unit 24 is configured to determine signal stability of the serving cell according to the signal strength of the serving cell, and determine signal stability of the neighboring cell according to the signal strength of the neighboring cell; and

the fifth unit 25 is configured to camp on the serving cell when the signal stability of the neighboring cell is not less than the signal stability of the serving cell.

In addition, the apparatus of the embodiment further includes:

a sixth unit, configured to, when the signal stability is not greater than the preset threshold, acquire, at a next time point, a signal strength of the serving cell; and

a seventh unit, configured to perform a step of calculating the signal stability of the serving cell according to all signal strengths other than a signal strength obtained at a first time point among the signal strengths of which the number is designated, and according to the signal strength obtained at the next time point.

Specifically, the fifth unit includes:

an eighth unit, configured to camp on the serving cell when the number of neighboring cells is one, and when the signal stability of the neighboring cell is not less than the signal stability of the serving cell; and

a ninth unit, configured to camp on the serving cell when the number of neighboring cells is at least two, and when minimum stability among signal stability of the neighboring cells is not less than the signal stability of the serving cell.

The apparatus of the embodiment further includes:

a tenth unit, configured to reselect the serving cell to be the neighboring cell when the number of neighboring cells is one, and when the signal stability of the neighboring cell is less than the signal stability of the serving cell; and

an eleventh unit, configured to reselect the serving cell to be a neighboring cell corresponding to minimum stability when the number of neighboring cells is at least two, and when the minimum stability among signal stability of the neighboring cells is less than the signal stability of the serving cell.

The apparatus may be a Modem, or the apparatus is set in a Modem device.

For an operation process of the apparatus, reference is made to the implementation process of the foregoing cell reselection method. In the apparatus embodiment, the terms same as those in the method embodiment have the same meaning.

Persons of ordinary skill in the art should understand that all or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be any medium that is capable of storing program codes, such as a ROM, a RAM, a magnetic disk, or an optical disk.

The foregoing descriptions are merely several embodiments of the present invention, but not intended to limit the present invention.

## Claims

1. A method for controlling cell reselection, comprising:

when duration starting from when a signal strength of a current cell is just lower than a set value exceeds a first set time, acquiring (101) signal strengths of the current cell and a neighboring cell within a second set time;

determining (102) signal stability of the current cell according to the signal strength of the current cell, and determining signal stability of the neighboring cell according to the signal strength of the neighboring cell; and

making (103) a serving cell camp on the current cell when the signal stability of the neighboring cell is not less than the signal stability of the current cell;

wherein the step of determining (102) the signal stability of the current cell according to the signal strength of the current cell comprises:

determining the signal stability of the current cell according to $Q'_{var} = \dfrac{\sum\limits_{n=1}^{N} |q_n - Q_{avg}|}{N}$,

wherein $Q'_{var}$ is the signal stability of the current cell, $q_n$ is a signal strength of the current cell that is acquired at the nth time point within the second set time, $Q_{avg}$ is an average of signal strengths of the current cell that are acquired at N time points within the second set time, N is the number of times when the signal strength of the current cell is acquired within the second set time, and N is greater than or equal to 2.

2. The method according to claim 1, wherein the step of determining (102) the signal stability of the neighboring cell according to the signal strength of the neighboring cell comprises:

determining the signal stability of the neighboring cell according to $Q_r = \dfrac{\sum\limits_{n=1}^{N} \left| w_n - Q_a \right|}{N}$, wherein $Q_r$ is the signal stability of the neighboring cell, $w_n$ is a signal strength of the neighboring cell that is acquired at the nth time point within the second set time, $Q_a$ is an average of signal strengths of the neighboring cell that are acquired at N time points within the second set time, and N is the number of times when the signal strength of the neighboring cell is acquired within the second set time.

3. The method according to claim 1, wherein the step of making (103) the serving cell camp on the current cell when the signal stability of the neighboring cell is not less than the signal stability of the current cell comprises:

making the serving cell camp on the current cell when the number of neighboring cells is one, and when the signal stability of the neighboring cell is not less than the signal stability of the current cell; and
making the serving cell camp on the current cell when the number of neighboring cells is at least two, and when minimum stability among signal stability of the neighboring cells is not less than the signal stability of the current cell.

4. The method according to claim 1, further comprising:

performing (104) reselection of the serving cell from the current cell to the neighboring cell when the signal stability of the neighboring cell is less than the signal stability of the current cell.

5. The method according to claim 4, wherein the step of performing (104) reselection of the serving cell from the current cell to the neighboring cell when the signal stability of the neighboring cell is less than the signal stability of the current cell comprises:

performing (104) reselection of the serving cell from the current cell to the neighboring cell when the number of neighboring cells is one, and when the signal stability of the neighboring cell is less than the signal stability of the current cell; and
performing (105) reselection of the serving cell from the current cell to a neighboring cell corresponding to minimum stability when the number of neighboring cells is at least two, and when the minimum stability among signal stability of the neighboring cells is less than the signal stability of the current cell.

6. The method according to claim 1, 3, 4 or 5, wherein after the step of making (103) the serving cell camp on the current cell, or the step of performing (104) reselection of the serving cell from the current cell to the neighboring cell, or the step of performing (105) reselection of the serving cell from the current cell to the neighboring cell corresponding to the minimum stability, and when the duration starting from when the signal strength of the current cell is lower than the set value exceeds a third set time, the method further comprises:

successively acquiring (201) signal strengths of the serving cell at time points of which the number is designated;
calculating (202) signal stability of the serving cell according to the obtained signal strengths of which the number is designated;
when the signal stability is greater than a preset threshold, acquiring (203) signal strengths of the serving cell and the neighboring cell within a fourth set time;
when the signal stability is not greater than the preset threshold, acquiring (204), at a next time point, a signal strength of the serving cell; and
performing (205) a step of calculating the signal stability of the serving cell according to all signal strengths other than a signal strength obtained at a first time point among the signal strengths of which the number is designated, and according to the signal strength obtained at the next time point.

7. The method according to claim 6, wherein after the step of acquiring the signal strengths of the serving cell and the neighboring cell within the fourth set time when the signal stability is greater than the preset threshold, the method further comprises:

determining (304) signal stability of the serving cell according to a signal strength of the serving cell, and determining signal stability of the neighboring cell according to a signal strength of the neighboring cell;
when the number of neighboring cells is one, camping on the serving cell when the signal stability of the neighboring cell is not less than the signal stability of the serving cell, or reselecting the serving cell to be the neighboring cell when the signal stability of the neighboring cell is less than the signal stability of the serving cell; and when the number of neighboring cells is at least two, camping on the serving cell when minimum stability among signal stability of the neighboring cells is not less than the signal stability of the serving cell; or reselecting the serving cell to be a neighboring cell corresponding to minimum stability when the minimum stability among signal stability of the neighboring cells is less than the signal stability of the serving cell.

8. An apparatus for controlling cell reselection, comprising:

a signal strength acquisition unit (11), configured to, when duration starting from when a signal strength of a current cell is just lower than a set value exceeds a first set time, acquire signal strengths of the current cell and a neighboring cell within a second set time;
a signal stability determining unit (12), configured to determine signal stability of the current cell according to the signal strength of the current cell, and determine signal stability of the neighboring cell according to the signal strength of the neighboring cell; and
a reselection control unit (13), configured to make a serving cell camp on the current cell when the signal stability of the neighboring cell is not less than the signal stability of the current cell;
wherein the signal stability determining unit (12) is configured to:

determine the signal stability of the current cell according to $Q'_{var} = \dfrac{\sum\limits_{n=1}^{N} |q_n - Q_{avg}|}{N}$,

wherein $Q'_{var}$ is the signal stability of the current cell, $q_n$ is a signal strength of the current cell that is acquired at the nth time point within the second set time, $Q_{avg}$ is an average of signal strengths of the current cell that are acquired at N time points within the second set time, and N is the number of times when the signal strength of the current cell is acquired within the second set time.

9. The apparatus according to claim 8, wherein the signal stability determining unit (12) is configured to:

determine the signal stability of the neighboring cell according to $Q_r = \dfrac{\sum\limits_{n=1}^{N} |w_n - Q_a|}{N}$, wherein

$Q_r$ is the signal stability of the neighboring cell, $w_n$ is a signal strength of the neighboring cell that is acquired at the nth time point within the second set time, $Q_a$ is an average of signal strengths of the neighboring cell that are acquired at N time points within the second set time, and N is the number of times when the signal strength of the neighboring cell is acquired within the second set time.

10. The apparatus according to claim 8, wherein the reselection control unit (13) is configured to make the serving cell camp on the current cell when the number of neighboring cells is one, and when the signal stability of the neighboring cell is not less than the signal stability of the current cell; and is further configured to make the serving cell camp on the current cell when the number of neighboring cells is at least two, and when minimum stability among signal stability of the neighboring cells is not less than the signal stability of the current cell.

11. The apparatus according to claim 8, wherein the reselection control unit (13) is configured to perform reselection of the serving cell from the current cell to the neighboring cell when the number of neighboring cells is one, and when the signal stability of the neighboring cell is less than the signal stability of the current cell; and is further configured to perform reselection of the serving cell from the current cell to a neighboring cell corresponding to minimum stability when the number of neighboring cells is at least two, and when the minimum stability among signal stability of the neighboring cells is less than the signal stability of the current cell.

12. The apparatus according to claim 8, 10 or 11, wherein
the signal strength acquisition unit (11) is further configured to successively acquire signal strengths of the serving cell at time points of which the number is designated;
the signal stability determining unit (12) is further configured to calculate signal stability of the serving cell according to the obtained signal strengths of which the number is designated;
the signal strength acquisition unit (11) is further configured to, when the signal stability is greater than a preset threshold, acquire signal strengths of the serving cell and the neighboring cell within a fourth set time;
the signal strength acquisition unit (11) is further configured to, when the signal stability is not greater than the preset threshold, acquire, at a next time point, a signal strength of the serving cell; and

the signal stability determining unit (12) is further configured to recalculate the signal stability of the serving cell according to all signal strengths other than a signal strength obtained at a first time point among the signal strengths of which the number is designated, and according to the signal strength obtained at the next time point.

13. The apparatus according to claim 12, further comprising:

the signal stability determining unit (12) is further configured to determine signal stability of the serving cell according to a signal strength of the serving cell, and determine signal stability of the neighboring cell according to a signal strength of the neighboring cell; and

the reselection control unit (13) is further configured to, when the number of neighboring cells is one, camp on the serving cell when the signal stability of the neighboring cell is not less than the signal stability of the serving cell, or reselect the serving cell to be the neighboring cell when the signal stability of the neighboring cell is less than the signal stability of the serving cell; or when the number of the neighboring cells is at least two, camp on the serving cell when minimum stability among signal stability of the neighboring cells is not less than the signal stability of the serving cell, or reselect the serving cell to be a neighboring cell corresponding to minimum stability when the minimum stability among signal stability of the neighboring cells is less than the signal stability of the serving cell.

14. The apparatus according to any one of claims 8 to 13, wherein the apparatus is a modem.

**Patentansprüche**

1. Verfahren zum Steuern einer Zellenneuauswahl, umfassend:

wenn eine Dauer, ausgehend davon, dass eine Signalstärke einer gegenwärtigen Zelle gerade niedriger ist als ein eingestellter Wert, eine erste eingestellte Zeit überschreitet, Erlangen (101) von Signalstärken der gegenwärtigen Zelle und einer benachbarten Zelle innerhalb einer zweiten eingestellten Zeit; Bestimmen (102) einer Signalstabilität der gegenwärtigen Zelle gemäß der Signalstärke der gegenwärtigen Zelle und Bestimmen einer Signalstabilität der benachbarten Zelle gemäß der Signalstärke der benachbarten Zelle; und

Bewirken (103), dass die versorgende Zelle auf die gegenwärtige Zelle wartet, wenn die Signalstabilität der benachbarten Zelle nicht kleiner ist als die Signalstabilität der gegenwärtigen Zelle;

wobei der Schritt des Bestimmens (102) der Signalstabilität der gegenwärtigen Zelle gemäß der Signalstärke der gegenwärtigen Zelle umfasst:

Bestimmen der Signalstabilität der gegenwärtigen Zelle gemäß $Q'_{var} = \dfrac{\sum\limits_{n=1}^{N} |q_n - Q_{avg}|}{N}$, wobei

$Q'_{var}$ die Signalstabilität der gegenwärtigen Zelle ist, $q_n$ eine Signalstärke der gegenwärtigen Zelle ist, die zum n-ten Zeitpunkt innerhalb der zweiten eingestellten Zeit erlangt wird, $Q_{avg}$ ein Durchschnitt von Signalstärken der gegenwärtigen Zelle ist, die zu N Zeitpunkten innerhalb der zweiten eingestellten Zeit erlangt werden, N die Anzahl von Zeiten ist, zu denen die Signalstärke der gegenwärtigen Zelle innerhalb der zweiten eingestellten Zeit erlangt wird, und N größer als oder gleich 2 ist.

2. Verfahren nach Anspruch 1, wobei der Schritt des Bestimmens (102) der Signalstabilität der benachbarten Zelle gemäß der Signalstärke der benachbarten Zelle umfasst:

Bestimmen der Signalstabilität der benachbarten Zelle gemäß $Q_r = \dfrac{\sum\limits_{n=1}^{N} |w_n - Q_a|}{N}$, wobei $Q_r$

die Signalstabilität der benachbarten Zelle ist, $w_n$ eine Signalstärke der benachbarten Zelle ist, die zum n-ten Zeitpunkt innerhalb der zweiten eingestellten Zeit erlangt wird, $Q_a$ ein Durchschnitt von Signalstärken der benachbarten Zelle ist, die zu N Zeitpunkten innerhalb der zweiten eingestellten Zeit erlangt werden, und N die Anzahl von Zeiten ist, zu denen die Signalstärke der benachbarten Zelle innerhalb der zweiten eingestellten Zeit erlangt wird.

3. Verfahren nach Anspruch 1, wobei der Schritt des Bewirkens (103), dass die versorgende Zelle auf die gegenwärtige Zelle wartet, wenn die Signalstabilität der benachbarten Zelle nicht kleiner ist als die Signalstabilität der gegenwärtigen Zelle, umfasst:

Bewirken, dass die versorgende Zelle auf die gegenwärtige Zelle wartet, wenn die Anzahl von benachbarten Zellen eins ist und wenn die Signalstabilität der benachbarten Zelle nicht kleiner ist als die Signalstabilität der gegenwärtigen Zelle; und

Bewirken, dass die versorgende Zelle auf die gegenwärtige Zelle wartet, wenn die Anzahl von benachbarten Zellen mindestens zwei ist und wenn eine minimale Stabilität unter den Signalstabilitäten der benachbarten Zellen nicht kleiner ist als die Signalstabilität der gegenwärtigen Zelle.

4. Verfahren nach Anspruch 1, ferner umfassend:

Durchführen (104) von Neuauswahl der versorgenden Zelle von der gegenwärtigen Zelle zu der benachbarten Zelle, wenn die Signalstabilität der benachbarten Zelle kleiner ist als die Signalstabilität der gegenwärtigen Zelle.

5. Verfahren nach Anspruch 4, wobei der Schritt des Durchführens (104) von Neuauswahl der versorgenden Zelle von der gegenwärtigen Zelle zu der benachbarten Zelle, wenn die Signalstabilität der benachbarten Zelle kleiner ist als die Signalstabilität der gegenwärtigen Zelle, umfasst:

Durchführen (104) von Neuauswahl der versorgenden Zelle von der gegenwärtigen Zelle zu der benachbarten Zelle, wenn die Anzahl von benachbarten Zellen eins ist und wenn die Signalstabilität der benachbarten Zelle kleiner ist als die Signalstabilität der gegenwärtigen Zelle; und

Durchführen (105) von Neuauswahl der versorgenden Zelle von der gegenwärtigen Zelle zu einer benachbarten Zelle, die mit minimaler Stabilität korrespondiert, wenn die Anzahl von benachbarten Zellen mindestens zwei ist und wenn die minimale Stabilität unter den Signalstabilitäten der benachbarten Zellen kleiner ist als die Signalstabilität der gegenwärtigen Zelle.

6. Verfahren nach Anspruch 1, 3, 4 oder 5, wobei das Verfahren nach dem Schritt des Bewirkens (103), dass die versorgende Zelle auf die gegenwärtige Zelle wartet, oder dem Schritt des Durchführens (104) von Neuauswahl der versorgenden Zelle von der gegenwärtigen zu der benachbarten Zelle oder dem Schritt des Durchführens (105) von Neuauswahl der versorgenden Zelle von der gegenwärtigen Zelle zu der benachbarten Zelle, die mit der minimalen Stabilität korrespondiert, und wenn die Dauer ausgehend davon, dass die Signalstärke der gegenwärtigen Zelle kleiner ist als der eingestellte Wert, eine dritte eingestellte Zeit überschreitet, ferner umfasst:

nacheinander Erlangen (201) von Signalstärken der versorgenden Zelle zu Zeitpunkten, deren Anzahl festgelegt ist;

Berechnen (202) einer Signalstabilität der versorgenden Zelle gemäß den erlangten Signalstärken, deren Anzahl festgelegt ist;

wenn die Signalstabilität größer ist als ein voreingestellter Schwellenwert, Erlangen (203) von Signalstärken der versorgenden Zelle und der benachbarten Zelle innerhalb einer vierten eingestellten Zeit;

wenn die Signalstabilität nicht größer ist als der voreingestellte Schwellenwert, Erlangen (204), zu einem nächsten Zeitpunkt, einer Signalstärke der versorgenden Zelle; und

Durchführen (205) eines Schritts des Berechnens der Signalstabilität der versorgenden Zelle gemäß allen anderen Signalstärken als eine Signalstärke, die zu einem festen Zeitpunkt erlangt wurde, unter den Signalstärken, deren Anzahl festgelegt ist, und gemäß der Signalstärke, die zu dem nächsten Zeitpunkt erlangt wurde.

7. Verfahren nach Anspruch 6, wobei das Verfahren nach dem Schritt des Erlangens der Signalstärken der versorgenden Zelle und der benachbarten Zelle innerhalb der vierten eingestellten Zeit, wenn die Signalstabilität größer ist als der voreingestellte Schwellenwert, ferner umfasst:

Bestimmen (304) einer Signalstabilität der versorgenden Zelle gemäß einer Signalstärke der versorgenden Zelle und Bestimmen einer Signalstabilität der benachbarten Zelle gemäß einer Signalstärke der benachbarten Zelle;

wenn die Anzahl von benachbarten Zellen eins ist, Warten auf die versorgende Zelle, wenn die Signalstabilität der benachbarten Zelle nicht kleiner ist als die Signalstabilität der versorgenden Zelle, oder Neuauswählen der versorgenden Zelle, die benachbarte Zelle zu sein, wenn die Signalstabilität der benachbarten Zelle kleiner ist als die Signalstabilität der versorgenden Zelle; und

wenn die Anzahl von benachbarten Zellen mindestens zwei ist, Warten auf die versorgende Zelle, wenn eine minimale Stabilität unter den Signalstabilitäten der benachbarten Zellen nicht kleiner ist als die Signalstabilität der versorgenden Zelle; oder Neuauswählen der versorgenden Zelle, eine benachbarte Zelle zu sein, die mit einer minimalen Stabilität korrespondiert, wenn die minimale Stabilität unter den Signalstabilitäten der benachbarten Zellen kleiner ist als die Signalstabilität der versorgenden Zelle.

8. Vorrichtung zum Steuern von Zellenneuauswahl, umfassend:

eine Signalstärke-Erlangungseinheit (11), konfiguriert zum, wenn eine Dauer, ausgehend davon, dass eine Signalstärke einer gegenwärtigen Zelle gerade niedriger ist als ein eingestellter Wert, eine erste eingestellte Zeit überschreitet, Erlangen von Signalstärken der gegenwärtigen Zelle und einer benachbarten Zelle innerhalb einer zweiten eingestellten Zeit;

eine Signalstabilität-Bestimmungseinheit (12), konfiguriert zum Bestimmen einer Signalstabilität der gegenwärtigen Zelle gemäß der Signalstärke der gegenwärtigen Zelle und Bestimmen einer Signalstabilität der benachbarten Zelle gemäß der Signalstärke der benachbarten Zelle; und

eine Neuauswahl-Steuereinheit (13), konfiguriert zum Bewirken, dass eine versorgende Zelle auf die gegenwärtige Zelle wartet, wenn die Signalstabilität der benachbarten Zelle nicht kleiner ist als die Signalstabilität der gegenwärtigen Zelle;

wobei die Signalstabilität-Bestimmungseinheit (12) konfiguriert ist zum:

Bestimmen der Signalstabilität der gegenwärtigen Zelle gemäß $Q'_{var} = \dfrac{\sum_{n=1}^{N} |q_n - Q_{avg}|}{N}$, wobei

$Q'_{var}$ die Signalstabilität der gegenwärtigen Zelle ist, $q_n$ eine Signalstärke der gegenwärtigen Zelle ist, die zum n-ten Zeitpunkt innerhalb der zweiten eingestellten Zeit erlangt wird, $Q_{avg}$ ein Durchschnitt von Signalstärken der gegenwärtigen Zelle ist, die zu N Zeitpunkten innerhalb der zweiten eingestellten Zeit erlangt werden, und N die Anzahl von Zeiten ist, zu denen die Signalstärke der gegenwärtigen Zelle innerhalb der zweiten eingestellten Zeit erlangt wird.

9. Vorrichtung nach Anspruch 8, wobei die Signalstabilität-Bestimmungseinheit (12) konfiguriert ist zum:

Bestimmen der Signalstabilität der benachbarten Zelle gemäß $Q_r = \dfrac{\sum_{n=1}^{N} |w_n - Q_a|}{N}$, wobei $Q_r$

die Signalstabilität der benachbarten Zelle ist, $w_n$ eine Signalstärke der benachbarten Zelle ist, die zum n-ten Zeitpunkt innerhalb der zweiten eingestellten Zeit erlangt wird, $Q_a$ ein Durchschnitt von Signalstärken der benachbarten Zelle ist, die zu N Zeitpunkten innerhalb der zweiten eingestellten Zeit erlangt werden, und N die Anzahl von Zeiten ist, zu denen die Signalstärke der benachbarten Zelle innerhalb der zweiten eingestellten Zeit erlangt wird.

10. Vorrichtung nach Anspruch 8, wobei die Neuauswahl-Steuereinheit (13) konfiguriert ist, zu bewirken, dass die versorgende Zelle auf die gegenwärtige Zelle wartet, wenn die Anzahl von benachbarten Zellen eins ist und wenn die Signalstabilität der benachbarten Zelle nicht kleiner ist als die Signalstabilität der gegenwärtigen Zelle; und ferner konfiguriert ist, zu bewirken, dass die versorgende Zelle auf die gegenwärtige Zelle wartet, wenn die Anzahl von benachbarten Zellen mindestens zwei ist und wenn eine minimale Stabilität unter den Signalstabilitäten der benachbarten Zellen nicht kleiner ist als die Signalstabilität der gegenwärtigen Zelle.

11. Vorrichtung nach Anspruch 8, wobei die Neuauswahl-Steuereinheit (13) konfiguriert ist, Neuauswahl der versorgenden Zelle von der gegenwärtigen Zelle zu der benachbarten Zelle durchzuführen, wenn die Anzahl der benachbarten Zellen eins ist und wenn die Signal stabilität der benachbarten Zelle kleiner ist als die Signalstabilität der gegenwärtigen Zelle; und ferner konfiguriert ist, Neuauswahl der versorgenden Zelle von der gegenwärtigen Zelle zu einer benachbarten Zelle, die mit einer minimalen Stabilität korrespondiert, durchzuführen, wenn die Anzahl von benachbarten Zellen mindestens zwei ist und wenn die minimale Stabilität unter den Signalstabilitäten der benachbarten Zellen kleiner ist als die Signalstabilität der gegenwärtigen Zelle.

12. Vorrichtung nach Anspruch 8, 10 oder 11, wobei die Signalstärke-Erlangungseinheit (11) ferner konfiguriert ist, nacheinander Signalstärken der versorgenden Zelle zu Zeitpunkten, deren Anzahl festgelegt ist, zu erlangen;

die Signalstabilität-Bestimmungseinheit (12) ferner konfiguriert ist, eine Signalstabilität der versorgenden Zelle gemäß den erlangten Signalstärken, deren Anzahl festgelegt ist, zu berechnen;

die Signalstärke-Erlangungseinheit (11) ferner konfiguriert ist, wenn die Signalstabilität größer ist als ein voreingestellter Schwellenwert, Signalstärken der versorgenden Zelle und der benachbarten Zelle innerhalb einer vierten eingestellten Zeit zu erlangen;

die Signalstärke-Erlangungseinheit (11) ferner konfiguriert ist, wenn die Signalstabilität nicht größer ist als der voreingestellte Schwellenwert, zu einem nächsten Zeitpunkt eine Signalstärke der versorgenden Zelle zu erlangen; und

die Signalstabilität-Bestimmungseinheit (12) ferner konfiguriert ist, die Signalstabilität der versorgenden Zelle gemäß allen anderen Signalstärken als eine Signalstärke, die zu einem festen Zeitpunkt erlangt wurde, unter den Signalstärken, deren Anzahl festgelegt ist, und gemäß der Signalstärke, die zu dem nächsten Zeitpunkt erlangt wurde, neu zu berechnen.

13. Vorrichtung nach Anspruch 12, ferner umfassend:

die Signalstabilität-Bestimmungseinheit (12) ist ferner konfiguriert, die Signalstabilität der versorgenden Zelle gemäß einer Signalstärke der versorgenden Zelle zu bestimmen und eine Signalstabilität der benachbarten Zelle gemäß einer Signalstärke der benachbarten Zelle zu bestimmen; und
die Neuauswahl-Steuereinheit (13) ist ferner konfiguriert, wenn die Anzahl von benachbarten Zellen eins ist, auf die versorgende Zelle zu warten, wenn die Signalstabilität der benachbarten Zelle nicht kleiner ist als die Signalstabilität der versorgenden Zelle, oder die versorgende Zelle neu auszuwählen, die benachbarte Zelle zu sein, wenn die Signalstabilität der benachbarten Zelle kleiner ist als die Signalstabilität der versorgenden Zelle; oder wenn die Anzahl der benachbarten Zelle mindestens zwei ist, auf die versorgende Zelle zu warten, wenn eine minimale Stabilität unter den Signalstabilitäten der benachbarten Zellen nicht kleiner ist als die Signalstabilität der versorgenden Zelle, oder die versorgende Zelle neu auszuwählen, eine benachbarte Zelle zu sein, die mit einer minimalen Stabilität korrespondiert, wenn die minimale Stabilität unter den Signalstabilitäten der benachbarten Zellen kleiner ist als die Signalstabilität der versorgenden Zelle.

14. Vorrichtung nach einem der Ansprüche 8 bis 13, wobei die Vorrichtung ein Modem ist.

**Revendications**

1. Procédé de commande de resélection de cellule, comprenant les étapes suivantes :

lorsque la durée à partir du moment où une intensité de signal d'une cellule courante est juste inférieure à une valeur définie excède une première durée définie, acquérir (101) des intensités de signaux de la cellule courante et d'une cellule voisine pendant une deuxième durée définie ;
déterminer (102) une stabilité de signal de la cellule courante en fonction de l'intensité de signal de la cellule courante, et déterminer une stabilité de signal de la cellule voisine en fonction de l'intensité de signal de la cellule voisine ; et

faire camper (103) une cellule de desserte sur la cellule courante lorsque la stabilité de signal de la cellule voisine n'est pas inférieure à la stabilité de signal de la cellule courante ;
l'étape consistant à déterminer (102) la stabilité de signal de la cellule courante en fonction de l'intensité de signal de la cellule courante comprenant :

la détermination de la stabilité de signal de la cellule courante en fonction de

$$Q'_{var} = \frac{\sum_{n=1}^{N} |q_n - Q_{avg}|}{N},$$ où $Q'_{var}$ est la

stabilité de signal de la cellule courante, $q_n$ est une intensité de signal de la cellule courante qui est acquise au $n^{ième}$ instant de la deuxième durée définie, $Q_{avg}$ est une moyenne des intensités de signaux de la cellule courante qui sont acquises à N instants pendant la deuxième durée définie, N est le nombre de fois où l'intensité de signal de la cellule courante est acquise pendant la deuxième durée définie, et N est supérieure ou égale à 2.

2. Procédé selon la revendication 1, dans lequel l'étape consistant à déterminer (102) la stabilité de signal de la cellule voisine en fonction de l'intensité de signal de la cellule voisine comprend :

la détermination de la stabilité de signal de la cellule voisine en fonction de

$$Q_r = \frac{\sum_{n=1}^{N} |w_n - Q_a|}{N},$$ où $Q_r$ est la stabilité de signal de la cellule voisine, $w_n$ est une intensité de signal de la cellule voisine qui est acquise au $n^{ième}$ instant de la deuxième durée définie, $Q_a$ est une moyenne des intensités de signaux de la cellule voisine qui sont acquises à N instants pendant la deuxième durée définie, et N est le nombre de fois où l'intensité de signal de la cellule voisine est acquise pendant la deuxième durée définie.

3. Procédé selon la revendication 1, dans lequel l'étape consistant à faire camper (103) la cellule de desserte sur la cellule courante lorsque la stabilité de signal de la cellule voisine n'est pas inférieure à la stabilité de signal de la cellule courante comprend le fait de :

faire camper la cellule de desserte sur la cellule courante lorsque le nombre de cellules voisines est de un, et lorsque la stabilité de signal de la cellule voisine n'est pas inférieure à la stabilité de signal de la cellule courante ; et

faire camper la cellule de desserte sur la cellule courante lorsque le nombre de cellules voisines est d'au moins deux, et lorsqu'une stabilité minimale parmi les stabilités de signaux des cellules voisines n'est pas inférieure à la stabilité de signal de la cellule courante.

4. Procédé selon la revendication 1, comprenant en outre l'étape consistant à :

exécuter (104) une resélection de la cellule de desserte de la cellule courante vers la cellule voisine lorsque la stabilité de signal de la cellule voisine est inférieure à la stabilité de signal de la cellule courante.

5. Procédé selon la revendication 4, dans lequel l'étape consistant à exécuter (104) une resélection de la cellule de desserte de la cellule courante vers la cellule voisine lorsque la stabilité de signal de la cellule voisine est inférieure à la stabilité de signal de la cellule courante comprend :

l'exécution (104) d'une resélection de la cellule de desserte de la cellule courante vers la cellule voisine lorsque le nombre de cellules voisines est de un, et lorsque la stabilité de signal de la cellule voisine est inférieure à la stabilité de signal de la cellule courante ; et
l'exécution (105) d'une resélection de la cellule de desserte de la cellule courante vers une cellule voisine correspondant à une stabilité minimale lorsque le nombre de cellules voisines est d'au moins deux, et lorsque la stabilité minimale parmi les stabilités de signaux des cellules voisines est inférieure à la stabilité de signal de la cellule courante.

6. Procédé selon la revendication 1, 3, 4 ou 5, dans lequel, après l'étape consistant à faire camper (103) la cellule de desserte sur la cellule courante, ou l'étape consistant à exécuter (104) une resélection de la cellule de desserte de la cellule courante vers la cellule voisine, ou l'étape consistant à exécuter (105) une resélection de la cellule de desserte de la cellule courante vers la cellule voisine correspondant à la stabilité minimale, et lorsque la durée à partir du moment où l'intensité de signal de la cellule courante est inférieure à la valeur définie excède une troisième durée définie, le procédé comprend en outre les étapes consistant à :

acquérir successivement (201) des intensités de signaux de la cellule de desserte à des instants dont le nombre est désigné ;
calculer (202) une stabilité de signal de la cellule de desserte en fonction des intensités de signaux obtenues dont le nombre est désigné ;
lorsque la stabilité de signal est supérieure à un seuil prédéfini, acquérir (203) des intensités de signaux de la cellule de desserte et de la cellule voisine pendant une quatrième durée définie ;
lorsque la stabilité de signal est non supérieure au seuil prédéfini, acquérir (204), à un instant suivant, une intensité de signal de la cellule de desserte ; et
exécuter (205) une étape de calcul de la stabilité de signal de la cellule de desserte en fonction de toutes les intensités de signaux autres qu'une intensité de signal obtenue à un premier instant parmi les intensités de signaux dont le nombre est désigné, et en fonction de l'intensité de signal obtenue à l'instant suivant.

7. Procédé selon la revendication 6, dans lequel, après l'étape consistant à acquérir les intensités de signaux de la cellule de desserte et la cellule voisine pendant la quatrième durée définie lorsque la stabilité de signal est supérieure au seuil prédéfini, le procédé comprenant en outre les étapes consistant à :

déterminer (304) une stabilité de signal de la cellule de desserte en fonction d'une intensité de signal de la cellule de desserte, et déterminer une stabilité de signal de la cellule voisine en fonction d'une intensité de signal de la cellule voisine ;
lorsque le nombre de cellules voisines est de un, camper sur la cellule de desserte lorsque la stabilité de signal de la cellule voisine n'est pas inférieure à la stabilité de signal de la cellule de desserte, ou resélectionner la cellule de desserte comme étant la cellule voisine lorsque la stabilité de signal de la cellule voisine est inférieure à la stabilité de signal de la cellule de desserte ; et
lorsque le nombre de cellules voisines est d'au moins deux, camper sur la cellule de desserte lorsqu'une stabilité minimale parmi les stabilités de signaux des cellules voisines n'est pas inférieure à la stabilité de signal de la cellule de desserte, ou resélectionner la cellule de desserte comme étant une cellule voisine correspondant à une stabilité minimale lorsque la stabilité minimale parmi les stabilités de signaux des cellules voisines est inférieure à la stabilité de signal de la cellule de desserte.

8. Appareil pour commander une resélection de cellule, comprenant :

une unité d'acquisition d'intensité de signal (11), configurée pour, lorsque la durée à partir du moment où une intensité de signal d'une cellule courante est juste inférieure à une valeur définie excède une première durée définie, acquérir des intensités de signaux de la cellule courant et d'une cellule voisine pendant une deuxième durée définie ;

une unité de détermination de stabilité de signal (12), configurée pour déterminer une stabilité de signal de la cellule courante en fonction de l'intensité de signal de la cellule courante, et déterminer une stabilité de signal de la cellule voisine en fonction de l'intensité de signal de la cellule voisine ; et

une unité de commande de resélection (13), configurée pour faire camper la cellule de desserte sur la cellule courante lorsque la stabilité de signal de la cellule voisine n'est pas inférieure à la stabilité de signal de la cellule courante ;

l'unité de détermination de stabilité de signal (12) étant configurée pour :

déterminer la stabilité de signal de la cellule courante en fonction de

$$Q'_{var} = \frac{\sum_{n=1}^{N} |q_n - Q_{avg}|}{N},$$ où $Q'_{var}$ est la

stabilité de signal de la cellule courante, $q_n$ est une intensité de signal de la cellule courante qui est acquise au $n^{ième}$ instant de la deuxième durée définie, $Q_{avg}$ est une moyenne des intensités de signaux de la cellule courante qui sont acquises à N instants pendant la deuxième durée définie, et N est le nombre de fois où l'intensité de signal de la cellule courante est acquise pendant la deuxième durée définie.

9. Appareil selon la revendication 8, dans lequel l'unité de détermination de stabilité de signal (12) est configurée pour :

déterminer la stabilité de signal de la cellule voisine en fonction de $Q_r = \frac{\sum_{n=1}^{N} |w_n - Q_a|}{N},$ où $Q_r$

est la stabilité de signal de la cellule voisine, $w_n$ est une intensité de signal de la cellule voisine qui est acquise au $n^{ième}$ instant de la deuxième durée définie, $Q_a$ est une moyenne des intensités de signaux de la cellule voisine qui sont acquises à N instants pendant la deuxième durée définie, et N est le nombre de fois où l'intensité de signal de la cellule voisine est acquise pendant la deuxième durée définie.

10. Appareil selon la revendication 8, dans lequel l'unité de commande de resélection (13) est configurée pour faire camper la cellule de desserte sur la cellule courante lorsque le nombre de cellules voisines est de un, et lorsque la stabilité de signal de la cellule voisine n'est pas inférieure à la stabilité de signal de la cellule courante ; et est en outre configurée pour faire camper la cellule de desserte sur la cellule courante lorsque le nombre de cellules voisines est d'au moins deux, et lorsqu'une stabilité minimale parmi les stabilités de signaux des cellules voisines n'est pas inférieure à la stabilité de signal de la cellule courante.

11. Appareil selon la revendication 8, dans lequel l'unité de commande de resélection (13) est configurée pour exécuter une resélection de la cellule de desserte de la cellule courante vers la cellule voisine lorsque le nombre de cellules voisines est de un, et lorsque la stabilité de signal de la cellule voisine est inférieure à la stabilité de signal de la cellule courante ; et est en outre configurée pour exécuter une resélection de la cellule de desserte de la cellule courante vers une cellule voisine correspondant à une stabilité minimale lorsque le nombre de cellules voisines est d'au moins deux, et lorsque la stabilité minimale parmi les stabilités de signaux des cellules voisines est inférieure à la stabilité de signal de la cellule courante.

12. Appareil selon la revendication 8, 10 ou 11, dans lequel

l'unité d'acquisition d'intensité de signal (11) est en outre configurée pour acquérir successivement des intensités de signaux de la cellule de desserte à des instants dont le nombre est désigné ;

l'unité de détermination de stabilité de signal (12) est en outre configurée pour calculer une stabilité de signal de la cellule de desserte en fonction des intensités de signaux obtenues dont le nombre est désigné ;

l'unité d'acquisition d'intensité de signal (11) est en outre configurée pour, lorsque la stabilité de signal est supérieure à un seuil prédéfini, acquérir des intensités de signaux de la cellule de desserte et de la cellule voisine pendant une quatrième durée définie ; l'unité d'acquisition d'intensité de signal (11) est en outre configurée pour, lorsque la stabilité de signal est non supérieure au seuil prédéfini, acquérir, à un instant suivant, une intensité de signal de la cellule de desserte ; et

l'unité de détermination de stabilité de signal (12) est en outre configurée pour recalculer la stabilité de signal de la cellule de desserte en fonction de toutes les intensités de signaux autres qu'une intensité de signal obtenue à un premier instant parmi les intensités de signaux dont le nombre est désigné, et en fonction de l'intensité de signal obtenue à l'instant suivant.

**13.** Appareil selon la revendication 12, comprenant en outre le fait que :

l'unité de détermination de stabilité de signal (12) est en outre configurée pour déterminer une stabilité de signal de la cellule de desserte en fonction d'une intensité de signal de la cellule de desserte, et déterminer une stabilité de signal de la cellule voisine en fonction d'une intensité de signal de la cellule voisine ; et l'unité de commande de resélection (13) est en outre configurée pour, lorsque le nombre de cellules voisines est de un, camper sur la cellule de desserte lorsque la stabilité de signal de la cellule voisine n'est pas inférieure à la stabilité de signal de la cellule de desserte, ou resélectionner la cellule de desserte comme étant la cellule voisine lorsque la stabilité de signal de la cellule voisine est inférieure à la stabilité de signal de la cellule de desserte ; ou lorsque le nombre de cellules voisines est d'au moins deux, camper sur la cellule de desserte lorsqu'une stabilité minimale parmi les stabilités de signaux des cellules voisines n'est pas inférieure à la stabilité de signal de la cellule de desserte, ou resélectionner la cellule de desserte comme étant une cellule voisine correspondant à une stabilité minimale lorsque la stabilité minimale parmi les stabilités de signaux des cellules voisines est inférieure à la stabilité de signal de la cellule de desserte.

**14.** Appareil selon l'une quelconque des revendications 8 à 13, dans lequel l'appareil est un modem.

when duration starting from when a signal strength of a current cell is just lower than a set value exceeds a first set time, acquire signal strengths of the current cell and a neighboring cell within a preset set time

101

Determine signal stability of the current cell according to a signal strength of the current cell, and determine signal stability of the neighboring cell according to a signal strength of the neighboring cell

102

Make a serving cell camp on the current cell when the signal stability of the neighboring cell is not less than the signal stability of the current cell

103

FIG. 1

when duration starting from when a signal strength of a current cell is just lower than a set value exceeds a first set time, acquire signal strengths of the current cell and a neighboring cell within a preset set time — 101

Determine signal stability of the current cell according to a signal strength of the current cell, and determine signal stability of the neighboring cell according to a signal strength of the neighboring cell — 102

103

Make a serving cell camp on the current cell when the signal stability of the neighboring cell is not less than the signal stability of the current cell

104

Perform reselection of a serving cell from the current cell to the neighboring cell when the number of neighboring cells is one, and when the signal stability of the neighboring cell is less than the signal stability of the current cell

105

Perform reselection of a serving cell from the current cell to a neighboring cell corresponding to minimum stability when the number of neighboring cells is at least two, and the minimum stability among signal stability of the neighboring cells is less than the signal stability of the current cell

FIG. 2

Successively acquire signal strengths of the serving cell at time points of which the number is designated — 201

Calculate signal stability of the serving cell according to the obtained signal strengths of which the number is designated — 202

when the signal stability is greater than a preset threshold, acquire signal strengths of the serving cell and a neighboring cell within a specified time period — 203

when the signal stability is not greater than a preset threshold, acquire, at a next time point, a signal strength of the serving cell — 204

Perform a step of calculating the signal stability of the serving cell according to all signal strengths other than a signal strength obtained at a first time point among the signal strengths of which the number is designated, and according to the signal strength obtained at the next time point — 205

FIG. 3

| | |
|---|---|
| When duration during which a signal strength of a current cell is lower than a set value exceeds a second set time, successively acquire a signal strength of a serving cell at time points of which the number is designated | 301 |

↓

| | |
|---|---|
| Calculate a signal stability of the serving cell according to the obtained signal strengths of which the number is designated | 302 |

↓

| | |
|---|---|
| When the signal stability is greater than a preset threshold, acquire signal strengths of the serving cell and the neighboring cell within a specified time period | 303 |

↓

| | |
|---|---|
| Determine signal stability of the serving cell according to a signal strength of the serving cell, and determine signal stability of the neighboring cell according to a signal strength of the neighboring cell | 304 |

↓

| | |
|---|---|
| Camp on the serving cell when the signal stability of the neighboring cell is not less than the signal stability of the serving cell | 305 |

↓

| | |
|---|---|
| when the signal stability is not greater than a preset threshold, acquire, at a next time point, a signal strength of the serving cell | 306 |

↓

| | |
|---|---|
| Perform a step of calculating the signal stability of the serving cell according to all signal strengths other than a signal strength obtained at a first time point among the signal strengths of which the number is designated, and according to the signal strength obtained at the next time point | 307 |

FIG. 4

Signal strength
acquisition unit — 11

Signal stability
determining unit — 12

Reselection control unit — 13

FIG. 5

First unit — 21

Second unit — 22

Third unit — 23

Fourth unit — 24

Fifth unit — 25

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009135759 A
- US 2010309887 A
- EP 1492372 A
- US 2009310562 A
- US 2007123258 A